# EUROPEAN PATENT SPECIFICATION

(11) **EP 3 131 269 B1**
(45) Date of publication and mention of the grant of the patent: **31.10.2018**
(21) Application number: 14888800.1
(22) Date of filing: 24.07.2014
(51) Int. Cl.: H04L 29/06, H04L 29/12, H04L 12/70

(54) **METHOD AND DEVICE FOR CONDUCTING AH AUTHENTICATION ON IPSEC PACKET WHICH HAS GONE THROUGH NAT TRAVERSAL**
VERFAHREN UND VORRICHTUNG ZUR DURCHFÜHRUNG VON AH-AUTHENTIFIZIERUNG AUF IPSEC-PAKET DURCH NAT-TRANSVERSAL
PROCÉDÉ ET DISPOSITIF POUR CONDUIRE UNE AUTHENTIFICATION AH SUR UN PAQUET IPSEC QUI EST PASSÉ PAR UNE TRAVERSÉE NAT

(30) Priority: 10.04.2014 CN 201410143380
(43) Date of publication of application: 15.02.2017
(73) Proprietor: ZTE Corporation, Shenzhen, Guangdong 518057 (CN)
(72) Inventor: GAO, Jian, Shenzhen Guangdong 518057 (CN)
(74) Representative: AWA Sweden AB
(86) International application number: PCT/CN2014/082879
(87) International publication number: WO 2015/154346

(56) References cited:
- CN-A- 101 707 605
- CN-A- 102 202 108
- CN-A- 102 946 352
- CN-A- 103 179 225
- GB-A- 2 413 248
- JACQUES DEMERJIAN ET AL: "A Secure Way to Combine IPsec, NAT & DHCP", 1 January 2005 (2005-01-01), COMPUTER NETWORK SECURITY LECTURE NOTES IN COMPUTER SCIENCE;;LNCS, SPRINGER, BERLIN, DE, PAGE(S) 104 - 118, XP019020329, ISBN: 978-3-540-29113-8 * page 108 * * page 111 - page 114 *
- STENBERG S PAAVOLAINEN T YLONEN T KIVINEN SSH COMMUNICATIONS SECURITY CORP M: "IPsec NAT-Traversal; draft-stenberg-ipsec-nat-traversal-02.txt" , IPSEC NAT-TRAVERSAL; DRAFT-STENBERG-IPSEC-NAT-TRAVERSAL-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 28 February 2001 (2001-02-28), XP015035694,

## Description

### Technical Field

The present invention relates to the field of information system and network security. Specifically, that is, it is guaranteed that only legitimate users can access the authorized resources in an information bearer network, and in the meantime normal services are protected to prevent external attacks.

### Background of the Related Art

At the initial stage of the development of the Internetwork (Internet), since the scale is smaller and the Internet is relatively private, perfect security protection means are not considered in designing. With the explosive increase of the Internet, a large number of unreliable users appear in public networks, but the vast majority of communication traffics have to go through these unsafe public networks, thus it cannot be ensured at all that sending and receiving data in the networks is safe and reliable. In order to make up for the network security deficiency, and for not needing to concern higher layer protocols but possessing a universality at the same time, the Internet community designs a protocol providing the security at an Internet Protocol IP layer. The protocol is called IP Security, IPSEC for short.

The security features of the IPSEC mainly include:
1. Data privacy: data are encrypted and decrypted through encryption algorithms such as a Triple Data Encryption Algorithm 3DES and an Advanced Encryption Algorithm AES and so on, which guarantees that even though a data packet is intercepted in a transmission process, the information cannot be cracked and read.
2. Data integrity: data are verified through algorithms such as a Message Digest Algorithm version 5 MD5 and a Secure Hash Algorithm SHA and so on, which prevents the data from being tampered by a third party in the transmission process.
3. Data anti-replay: a case that the data are retransmitted to a target end by a large number of replications after data are intercepted is prevented through a sequence number.
4. Non-repudiation: a sending party generates a digital signature through a private key and sends the digital signature together with the data, and a receiving party can verify the digital signature through a public key. The private key is only owned by the sending party in theory, thus the digital signature can be used to prevent that the sending party denies having sent the message.

The key concepts of the IPSEC mainly include:
1. Security Associations SA: a unidirectional logical channel is established for the security transmission, all data passing the same SA will obtain identical security services. Bidirectional data require one pair of SAs which are maintained between communication entities.
2. Security Associations Database SAD: which is used for storing all status data structures associated with the SA.
3. Security Policy Database SPD, which is used for storing security services applied by the data packets and ways for acquiring the security services.
4. Security Parameters Index SPI: which is a 32bit numerical value transmitted with an IP Authentication Header/ Encapsulate Secure Payload AH/ESP header, and used for a receiving end identifying a binding relationship between the data and the SA.

The IPSEC is not a separate protocol but a set of a series of protocols and services. The services and the set provide different types of security protections together.

The IPSEC protocols mainly include:
1. AH: the AH provides data integrity, data source authentication and anti-replay attack for an IP packet, but does not provide data confidentiality, which is appropriate for transmitting non-confidentiality data. The working principle of the AH includes the sending party applies the HMAC-MD5 (a bit string with random lengths and a secret key are taken as an input to output a 128bit integrity check value) or HMAC-SHA1 algorithm (a bit string with random lengths and a secret key are taken as an input to output a 160bit integrity check value) to the packet data contents to generate authentication data, and attaches the authentication data into the packet to be sent; after receiving the packet carrying the authentication data, the receiving party executes the same algorithm and makes a comparison with the authentication data of the sending party. If any modifications are made to the data in the transmission process, a failed comparison may be caused, and thus the data integrity protection can be provided.
   The AH will add one identity authentication header to each data packet, and the format is:
   Next Header: 8bit, describing a type of the next payload of the AH authentication header;
   Payload Length: 8bit, a length of the AH authentication header, taking 4 bytes as a unit and minus 2;
   Reserved: 16bit, a reserved field, reserved for later extensions;
   SPI: 32bit, the receiving party will search for a corresponding SA according to the SPI;
   Sequence Number: 32bit, a single increasing sequence number, uniquely identifying each data packet, and providing the anti-replay attack; and
   Authentication Data: normally 96bit, an integrity authentication value.
2. ESP: the ESP provides confidentiality, data integrity and anti-replay attack for an IP packet. The working principle of the ESP includes the sending party performs an encryption processing on effective payloads of the data packet through algorithms such as the DES, 3DES and AES and so on to prevent other users from acquiring contents of the data packet by monitoring, and the receiving party performs a decryption processing with the same secret key to recover a plaintext. The ESP also provides the data integrity protection, but does not authenticate an IP header. The ESP will add one ESP packet header and one ESP packet tail for each data packet.
   The format of the ESP packet header is:
   SPI: 32bit, the receiving party will search for a corresponding SA according to the SPI;
   Sequence Number: 32bit, a single increasing sequence number, uniquely identifying each data packet, and providing the anti-replay attack;
   IV: the length is indefinite, certain encryption algorithms need to use the IV, and the esp verifies the IV but does not encrypt the IV.

   The format of the ESP packet tail is:
   Padding: 0-255 bytes, a padding field;
   Padding Length: a padding field length, the receiving end removes a padding field according to the field;
   Next Header: 8bit, describing a type of the next payload of the ESP header.

   Both the AH and the ESP implement a tunnel mode and a transmission mode to support different application scenarios.
3. Internet Key Exchange IKE: the IKE provides algorithm and key negotiation services for any protocols required to be encrypted and authenticated in the Internet. The IKE divides an exchange process into two stages, the first stage is to establish a security alliance of the IKE itself and negotiate the encryption, authentication algorithm and secret key; and the second stage is to negotiate the algorithm and secret key for the IPSEC.

Since the AH mode is mainly used for protecting the integrity of the packet contents, and the authentication scope is the entire IP packet, all modifications of the fields participating in the authentication in the packet header will cause a failed AH authentication. However, a Network Address Translation NAT is to solve the problem of insufficient public network addresses by modifying an IP address and port number in the packet header. Therefore, the packet after the AH authentication and then traversing the NAT will cause a failed authentication at the receiving end.

A method for the IPSEC implementing the NAT traversal in the AH mode is introduced in the related art. The problem of coexistence of the AH mode and the NAT traversal can be solved, but there are the following disadvantages:
1. It is required that an NAT device should be able to perceive the IPSEC packet, which will further increase the processing pressure of the NAT device.
2. It is required to upgrade the NAT device in the existing network to support the IPSEC packet, which will increase the upgrade costs of the vendors in the existing network.

The features of the preamble of the independent claims are known from "A Secure Way to Combine IPsec, NAT&DHCP" of JACQUES DEMERJIAN ET AL, COMPUTER NETWORK SECURITY LECTURE NOTES IN COMPUTER SCIENCE; LNCS, SPRINGER, BERLIN, DE. Related technologies are also known from "IPsec NAT-Traversal; draft-stenberg-ipsec-nat-traversal-02.txt" of STENBERG S PAAVOLAINEN T YLONEN T KIVINEN SSH COMMUNICATIONS SECURITY CORP M, IPSEC NAT-TRAVERSAL; DRAFT-STENBERG-IPSEC-NAT-TRAVERSAL-02.TXT, INTERNET ENGINEERING TASK FORCE, IETF; STANDARDWORKINGDRAFT, INTERNET SOCIETY (ISOC) 4, RUE DES FALAISES CH-1205 GENEVA, SWITZERLAND and GB2413248A.

### Summary of the Invention

The embodiments of the present invention provide a method and device for performing an AH authentication on an IPSEC packet having gone through NAT traversal as defined in the independent claims, which can better solve the problem of prevent an intermediate NAT device from perceiving the IPSEC packet when an AH mode and the NAT traversal coexist, so that the IPSEC packet implements the NAT traversal in the AH mode.

Preferred embodiments are disclosed in the dependent claims.

### Brief Description of Drawings

FIG. 1 is a block diagram of a principle of a method for performing an AH authentication on an IPSEC packet having gone through NAT traversal provided in the embodiment of the present invention.
FIG. 2 is a block diagram of a device for performing an AH authentication on an IPSEC packet having gone through NAT traversal provided in the embodiment of the present invention.
FIG. 3 is a schematic diagram of an actual networking environment of the IPSEC packet traversing the NAT provided in the embodiment of the present invention.
FIG. 4 is a flow chart of the IKE first-stage negotiation provided in the embodiment of the present invention.
FIG. 5 is a flow chart of the IKE second-stage negotiation provided in the embodiment of the present invention.
FIG. 6 is an NAT translation table established by the two parties of the communication provided in the embodiment of the present invention.
FIG. 7 is a diagram of changes of an IPSEC packet traversing an NAT device provided in the embodiment of the present invention.
FIG. 8 is a flow of a packet processing of a communication receiving party when an IPSEC packet traverses an NAT device in an AH mode provided in the embodiment of the present invention.

### Preferred Embodiments of the Invention

The specific embodiments of the present invention will be described in detail in combination with the accompanying drawings below. It should be noted that the embodiments in the present invention and the characteristics in the embodiments can be arbitrarily combined with each other in the case of no conflict. In the embodiments of the present invention, during the IKE first-stage negotiation, the two parties of the communication perform a Network Address Translation-Traversal NAT-T ability detection by using a Vendor ID VID payload, and discover the existence of an NAT gateway by using a Network Address Translation-Discovery NAT-D payload. At the IKE second stage, an IPSEC packet transmission mode, such as Udp-Encapsulated-Tunnel (used for the UDP encapsulating an IPSEC packet in a tunnel mode) or Udp-Encapsulated-Transport (used for the UDP encapsulating an IPSEC packet in a Transport mode) will be negotiated, and meanwhile a Network Address Translation-Original Address (NAT-OA) payload is extended (or uses a user defined payload) to bear the original IP address and port number. After receiving an IKE negotiation packet from a sending end, a communication receiving end extracts an IP address and port number from a packet header, and then extracts an original IP address and port number from the NAT-OA payload. If the IP address and port number and the original IP address and port number are unequal, it represents that the packet has gone through the NAT device translation, and a corresponding NAT translation table is established. If the IP address and port number and the original IP address and port number are equal, it represents that the packet has not gone through the NAT device translation, and the corresponding translation table is not required to be established. After receiving the data packet from the sending end, the receiving end searches the corresponding the NAT translation table with the IP address and port number in the packet header. If a table entry is found, it represents that the data packet has gone through the NAT device translation, the IP address and port number of the data packet are replaced with the original IP address and fixed port number 4500 in the table entry, and a checksum is recalculated, and then AH authentication processing is performed. if no table entry is found, it represents that the packet has not gone through the NAT device translation, AH authentication processing is directly performed.

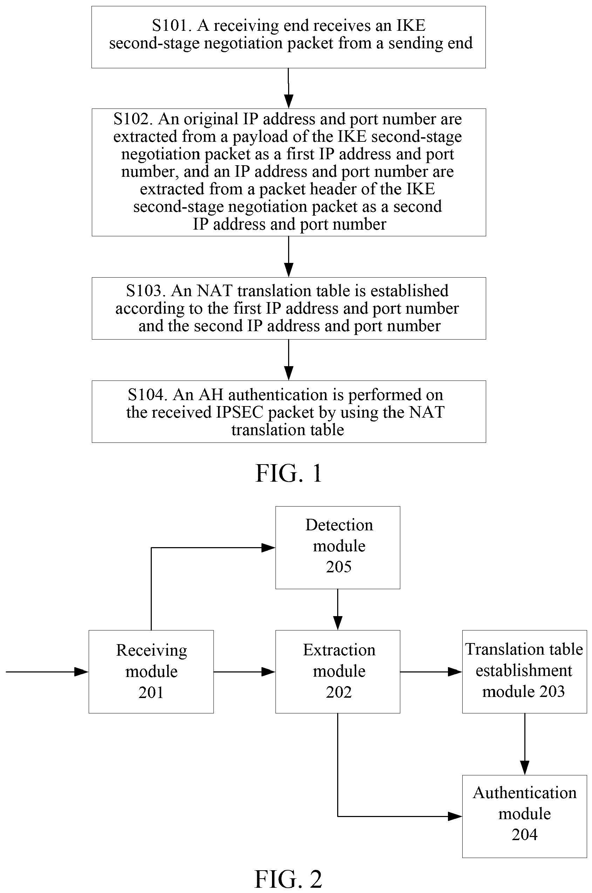

The embodiments of the present invention will be further described through FIG. 1 to FIG. 8 below.

FIG. 1 is a block diagram of a principle of a method for performing an AH authentication on an IPSEC packet having gone through NAT traversal provided in the embodiment of the present invention. As shown in FIG. 1, the following steps are included:
In step S101, a receiving end receives an IKE second-stage negotiation packet from a sending end.

Before the step 101 is executed, the receiving end detects an NAT traversal ability of the sending end, and detects an NAT device between the receiving end and the sending end. Herein, the step of detecting an NAT traversal ability of the sending end includes: the receiving end receives an IKE first-stage negotiation packet from the sending end, and if the IKE first-stage negotiation packet has a VID payload used for identifying the NAT traversal ability, the receiving end determines that the sending end has the NAT traversal ability. The step of detecting an NAT device between the receiving end and the sending end includes: the receiving end receives an IKE first-stage negotiation packet from the sending end, extracts a Hash value of an IP address and port number from a payload of the IKE first-stage packet as a first Hash value, extracts an IP address and port number from a packet header of the IKE first-stage packet, and calculates a Hash value of the extracted IP address and port number as a second Hash value. The receiving end compares the first Hash value with the second Hash value. If the first Hash value and the second Hash value are inconsistent, the receiving end determines that there is the NAT device between the receiving end and the sending end.

In step S102, an original IP address and an original port number are extracted from a payload of the IKE second-stage negotiation packet as a first IP address and port number, and an IP address and port number are extracted from a packet header of the IKE second-stage negotiation packet as a second IP address and port number.

In step S103, an NAT translation table is established according to the first IP address and port number and the second IP address and port number.

Herein, the receiving end compares the first IP address and port number with the second IP address and port number. If the first IP address and port number and the second IP address and port number are inconsistent, the receiving end establishes an NAT translation table used for translating the first IP address and port number and the second IP address and port number. If the first IP address and port number and the second IP address and port number are consistent, the receiving end does not need to establish the translation table.

In step S104, an AH authentication is performed on the received IPSEC packet by using the NAT translation table.

Herein, the receiving end receives an IPSEC packet from the sending end, and extracts an IP address and port number from a packet header of the IPSEC packet. The receiving end searches for the first IP address and port number corresponding to the extracted IP address and port number in the NAT translation table. If the first IP address and port number corresponding to the extracted IP address and port number are found, the IP address and port number in the packet header of the IPSEC packet are replaced with the first IP address and port number, and a checksum will be recalculated for the AH authentication. If the first IP address and port number corresponding to the extracted IP address and port number are not found, the AH authentication will be performed.

FIG. 2 is a block diagram of a device for performing an AH authentication on an IPSEC packet having gone through NAT traversal provided in the embodiment of the present invention. As shown in FIG. 2, the device includes a receiving module 201, an extraction module 202, a translation table establishment module 203, an authentication module 204 and a detection module 205. Herein, the receiving module 201 receives an IKE second-stage negotiation packet from a sending end. The extraction module 202 extracts an original IP address and port number from a payload of the IKE second-stage negotiation packet as a first IP address and port number, and extracts an IP address and port number from a packet header of the IKE second-stage negotiation packet as a second IP address and port number. The translation table establishment module 203 establishes an NAT translation table according to the first IP address and port number and the second IP address and port number so that the authentication module 204 performs an AH authentication on the received IPSEC packet by using the NAT translation table. The detection module 205 detects an NAT traversal ability of the sending end, and detects an NAT device between a receiving end and the sending end at the IKE first stage.

Herein, the translation table establishment module 203 includes:
a comparison submodule, configured to compare the first IP address and port number with the second IP address and port number; and
an establishment submodule, configured to, when the first IP address and port number and the second IP address and port number are inconsistent, establish an NAT translation table used for translating the first IP address and port number and the second IP address and port number.

The authentication module 204 includes:
an extraction submodule, configured to extract an IP address and port number from a packet header of the received IPSEC packet;
a searching submodule, configured to search for a first IP address and port number corresponding to the extracted IP address and port number in the NAT translation table; and
an authentication submodule, configured to, when the first IP address and port number corresponding to the extracted IP address and port number are found, replace the IP address and port number in the packet header of the IPSEC packet with the first IP address and port number, and recalculate a checksum for the AH authentication.

During the IKE first-stage negotiation, the receiving module 201 receives an IKE first-stage negotiation packet from the sending end, the detection module 205 performs an NAT-T ability detection by using a VID payload in the packet, and discovers the existence of an NAT gateway by using a NAT-D payload. At the IKE second stage, the receiving module 201 receives an IKE second-stage negotiation packet from the sending end, the extraction module 202 extracts an IP address and port number from a packet header of the packet, and then extracts an original IP address and port number from the NAT-OA payload. If the IP address and port number and the original IP address and port number are unequal, it represents that the packet has gone through the NAT device translation, the translation table establishment module 203 establishes a corresponding NAT translation table. If the IP address and port number and the original IP address and port number are equal, it represents that the packet has not gone through the NAT device translation, the corresponding translation table is not required to be established. After the receiving end 201 receives the IPSEC packet from the sending end, the authentication module 204 searches the corresponding NAT translation table with the IP address and port number in the packet header of the packet. If a table entry is found, it represents that the data packet has gone through the NAT device translation, the IP address and port number of the data packet are replaced with the original IP address and fixed port number 4500 in the table entry and a checksum is recalculated, and then the AH authentication processing is performed. If no table entry is found, it represents that the packet has not gone through the NAT device translation, the AH authentication processing is directly performed.

In the embodiments of the present invention, the IPSEC implements an NAT traversal in the AH mode, and the NAT device therein cannot perceive the IPSEC packet.

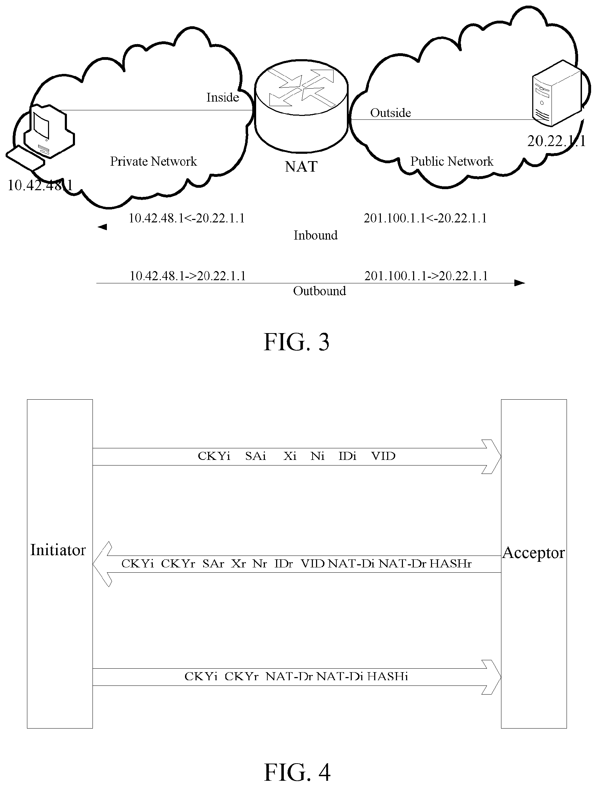

FIG. 3 is a schematic diagram of an actual networking environment of the IPSEC traversing the NAT provided in the embodiment of the present invention. As shown in FIG. 3, the actual networking environment of the IPSEC traversing the NAT includes two terminal devices and one NAT translation device. An IP address of the device located at a Private Network side is 10.42.48.1. An IP address of the device located at a Public Network side is 20.22.1.1. The NAT translation device allocates a public network IP address 201.100.1.1 for the private network IP address 10.42.48.1. If a port NAT PAT mode is using, then the NAT translation device allocates the public network PORT to be 15000. In an Inbound direction of the data packet, the target IP address 201.100.1.1 of the data packet is replaced with 10.42.48.1; and in an Outbound direction of the data packet, the source IP address 10.42.48.1 of the data packet is replaced with 201.100.1.1.

An IPSEC service is configured between the two terminal devices. Firstly, the NAT-T ability detection and NAT gateway discovery will be performed in an IKE first-stage negotiation process (the IPSEC traversing the NAT only supports a savage mode). As shown in FIG. 4, the two parties of the communication insert a VID payload identifying the NAT-T ability in messages to notify the support of NAT-T ability. If both the two parties insert the VID payload in respective messages, it indicates both the two parties support the NAT-T ability. The RFC3947 specified that contents of the VID payload are a hashed value 0x4a131c81070358455c5728f20e95452f obtained by performing an MD5 HASH operation on a particular character string "RFC 3947". Meanwhile, an NAT Discovery NAT-D payload is also inserted in the messages to detect whether there is an NAT device between the two parties of the communication. In the general condition, one message only contains two NAT-D payloads, herein, the content of the first NAT-D payload is a Hash value of the IP address and port number of the opposite end, and the second NAT-D payload is a Hash value of the IP address and port of the current end. If the initiator cannot determine its own IP address, the initiator is required to calculate an NAT-D payload for each possible IP address. If the hash value calculated by the two parties of the negotiation and the hash value received by the two parties of the negotiation are identical, it represents that there is no NAT device between the two parties. If the hash value calculated by the two parties of the negotiation and the hash value received by the two parties of the negotiation are different, the address or port has been translated in the transmission process. That is, processing of NAT traversal has been performed on the IPSEC packet, and meanwhile it can be known which device in the two parties of the communication is located behind the NAT device (i.e. the private network side).

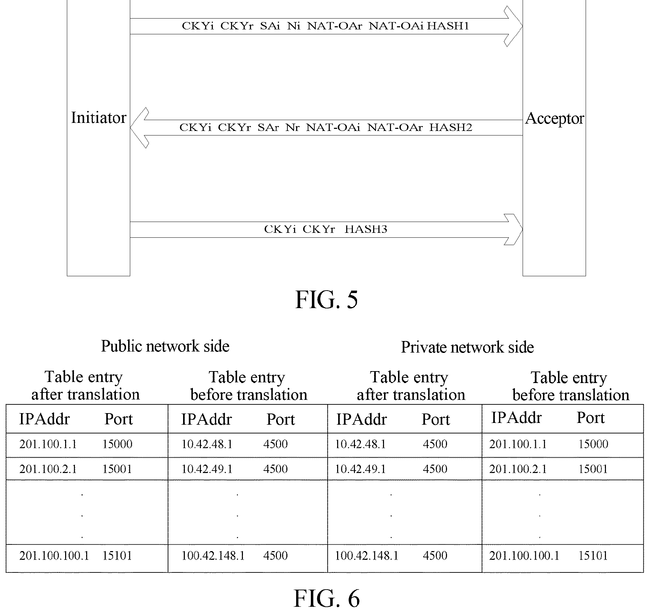

Secondly, the two parties of the communication will respectively establish a translation table entry in an IKE second-stage negotiation process (the device of the private network side will initiate a negotiation). As shown in FIG. 5, the two parties of the negotiation will insert an NAT-OA payload (or a payload defined by the user) in the messages to bear the original IP address and port number. For example, with regard to the initiator, NAT-OAi is the IP address+port number of the original sending party, NAT-OAr is the currently known IP address of the opposite end; and with regard to the acceptor namely the responder, NAT-OAi is the currently known IP address+port number of the opposite end, and NAT-OAr is the IP address of the responder, with FIG. 3 as an example:
the private network side: NAT-OAi = 10.42.48.1+4500; NAT-OAr = 20.22.1.1
the public network side: NAT-OAi = 201.100.1.1+15000; NAT-OAr = 20.22.1.1

Meanwhile, the two parties of the communication will also carry a packet encapsulation payload through a security proposal to negotiate a packet encapsulation mode which will be used: UDP-Encapsulated-Tunnel, used for the UDP encapsulating an Ipsec packet in a tunnel mode; and UDP-Encapsulated-Transport, used for the UDP encapsulating an IPsec packet in a Transport mode. Since certain NAT devices may perceive the IKE packets and perform certain special processing, in order to avoid the occurrence of such situation, the RFC document specifies that both a source port number and a target port number of the UDP encapsulation are fixed to be 4500.

The NAT translation table established by the two parties of the communication is as shown in FIG. 6, after receiving an IKE negotiation packet of the private network side, the public network side extracts an IP address and port number of the original sending party from the NAT-OAi, and extracts a source IP address and port number from the packet header. Then the two IP addresses are compared. If the two IP addresses are identical, it represents that the packet has not gone through the NAT device translation, and an NAT translation table is not required to be established. If the two IP addresses are different, it represents that the packet has gone through the NAT device processing, an IP+PORT translation table (i.e. the NAT translation table): 10.42.48.1+4500<------>201.100.1.1+15000 is established. Similarly the private network side may establish an IP+PORT translation table: 201.100.1.1+15000<------>10.42.48.1+4500.

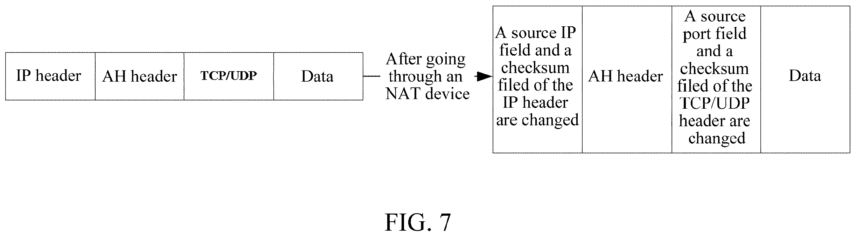

The situation of the IPSEC packet traversing the NAT in the actual networking will be described through an example below. FIG. 7 is a diagram of changes of an IPSEC packet traversing an NAT device provided in the embodiment of the present invention. As shown in FIG. 7, after the private network side sends an IPSEC packet to the NAT device, the NAT device translates the packet, a source IP and checksum in an IP header and a source PORT and checksum in a UDP header in the packet are changed. Then AH authentication will be performed after an AH packet reaches the public network side, and since the packet is changed in the transmission process, the AH authentication is failed, which causes that the data are discarded. In the packet sent by the public network, a target IP and a target port are changed. Herein, after the public network side sends an IPSEC packet to the NAT device, the NAT device translates the packet, a target IP and checksum in an IP header and a target PORT and checksum in a UDP header in the packet are changed. Then AH authentication will be performed after an AH packet reaches the private network side, and since the packet is changed in the transmission process, the AH authentication is failed, which causes that the data are discarded.

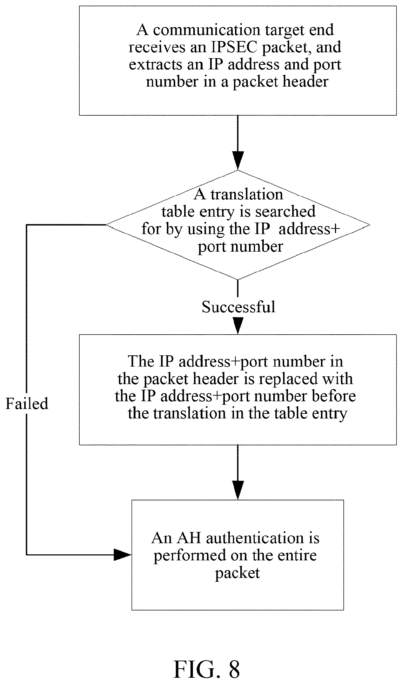

FIG. 8 is a flow of a packet processing of a communication receiving party when an IPSEC packet traverses an NAT device in an AH mode provided in the embodiment of the present invention. As shown in FIG. 8, the above problem is solved by the embodiment of the present invention in the actual networking. After receiving an IPSEC packet, the public network side extracts a source IP and port in the packet header to search an NAT translation table. If no table entry is found, an AH authentication is directly performed. If a table entry is found, the source IP and port number in the packet header is replaced with the IP and port number corresponding to the extracted source IP and port in the table entry, and a checksum is recalculated. Since the processed packet will keep consistent with the packet sent from the private network side, the AH authentication will be passed.

Similarly, after receiving an IPSEC packet, the private network side extracts a target IP and port in the packet header to search an NAT translation table. If no table entry is found, the AH authentication is directly performed. If a table entry is found, the target IP and port number in the packet header is replaced with the IP and port number corresponding to the extracted target IP and port in the table entry, and a checksum is recalculated. Since the processed packet will keep consistent with the packet sent from the public network side, the AH authentication will be passed.

The embodiment of the present invention also provides a computer program, which includes program instructions, herein, when the program instructions are executed by a receiving end, the receiving end may implement the method of the above embodiment.

The embodiment of the present invention also provides a carrier carrying the above computer program.

In conclusion, in the embodiments of the present invention, by means of carrying the original IP address and port number in the IKE negotiation packet, an NAT translation table between the original IP address and port number and the IP address and port number after the NAT translation is respectively established at the two parties of the communication, which prevents the intermediate NAT device from perceiving the IPSEC packet.

Though the present invention have been described in detail above, the present invention is not limited to this, and the people skilled in the art can make various modifications according to the principle of the present invention. Therefore, it should be understood that all the modifications made according to the principle of the present invention fall into the protection scope of the present invention.

The ordinary person skilled in the art can understand that all or part of the steps in the above method can be completed by a program instructing related hardware, and the above program can be stored in a computer readable memory medium, such as a read-only memory, magnetic disk or optical disk and so on. Alternatively, all or part of the steps of the above embodiments also can be implemented by using one or multiple integrated circuits. Correspondingly, each module/unit in the above embodiments can be implemented in a form of hardware, and also can be implemented in a form of software function module. The present invention is not limited to any combination of hardware and software in a specific form.

### Industrial Applicability

In the embodiments of the present invention, by means of carrying the original IP address and port number in the IKE negotiation packet, an NAT translation table between the original IP address and port number and the IP address and port number after the NAT translation is respectively established at the two parties of the communication, thereby preventing the NAT device from perceiving the IPSEC packet.

## Claims

1. A method for performing an Authentication Header, AH, authentication on an Internet Protocol Security, IPSEC, packet having gone through Network Address Translation, NAT, traversal, comprising:
a receiving end receiving (S101) an Internet Key Exchange, IKE, second-stage negotiation packet from a sending end;
**characterized in that**
the receiving end extracting (S102) an original Internet Protocol IP address and port number from a payload of the IKE second-stage negotiation packet as a first IP address and port number, and extracting (S102) an IP address and port number from a packet header of the IKE second-stage negotiation packet as a second IP address and port number;
the receiving end establishing (S103) an NAT translation table according to the first IP address and port number and the second IP address and port number, comprising: the receiving end comparing the first IP address and port number with the second IP address and port number; and, if the first IP address and port number and the second IP address and port number are inconsistent, the receiving end establishing the NAT translation table used for translating the first IP address and port number and the second IP address and port number; and
the receiving end performing (S104) the AH authentication on the received IPSEC packet having gone through the NAT traversal by using the NAT translation table, comprising: the receiving end receiving the IPSEC packet from the sending end, extracting an IP address and port number from a packet header of the IPSEC packet; the receiving end searching for the first IP address and port number corresponding to the extracted IP address and port number in the NAT translation table; and, if the first IP address and port number corresponding to the extracted IP address and port number are found, the receiving end replacing the IP address and port number in the packet header of the IPSEC packet having gone through the NAT traversal with the first IP address and port number, and recalculating a checksum for the AH authentication.

2. The method according to claim 1, wherein, before the step of a receiving end receiving an IKE negotiation packet from a sending end, the method further comprises: a step of the receiving end detecting an NAT traversal ability of the sending end, and a step of detecting an NAT device between the receiving end and the sending end.

3. The method according to claim 2, wherein, the step of detecting an NAT traversal ability of the sending end comprises:
the receiving end receiving an IKE first-stage negotiation packet from the sending end, and if the IKE first-stage negotiation packet has a Vendor ID, VID, payload used for identifying the NAT traversal ability, the receiving end determining that the sending end has the NAT traversal ability.

4. The method according to claim 2, wherein, the step of detecting an NAT device between the receiving end and the sending end comprises:
the receiving end receiving an IKE first-stage negotiation packet from the sending end;
extracting a Hash value of an IP address and port number from a payload of the IKE first-stage packet as a first Hash value;
extracting an IP address and port number from a packet header of the IKE first-stage packet, and calculating a Hash value of the extracted IP address and port number as a second Hash value;
comparing the first Hash value with the second Hash value; and
if the first Hash value and the second Hash value are inconsistent, determining that there is the NAT device between the receiving end and the sending end.

5. A device for performing an Authentication Header AH authentication on an Internet Protocol Security IPSEC packet having gone through Network Address Translation NAT traversal, comprising:
a receiving module (201), configured to receive an Internet Key Exchange IKE second-stage negotiation packet from a sending end;
**characterized in that**
an extraction module (202), configured to extract an original Internet Protocol IP address and port number from a payload of the IKE second-stage negotiation packet as a first IP address and port number, and extract an IP address and port number from a packet header of the IKE second-stage negotiation packet as a second IP address and port number;
a translation table establishment module (203), configured to establish an NAT translation table according to the first IP address and port number and the second IP address and port number; and
an authentication module (204), configured to perform the AH authentication on the received IPSEC packet having gone through the NAT traversal by using the NAT translation table;
wherein, the translation table establishment module (203) comprises:
a comparison submodule, configured to compare the first IP address and port number with the second IP address and port number; and,
an establishment submodule, configured to, when the first IP address and port number and the second IP address and port number are inconsistent, establish the NAT translation table used for translating the first IP address and port number and the second IP address and port number;
wherein, the authentication module (204) comprises:
an extraction submodule, configured to extract an IP address and port number from a packet header of the received IPSEC packet having gone through the NAT traversal;
a searching submodule, configured to search for the first IP address and port number corresponding to the extracted IP address and port number in the NAT translation table; and
an authentication submodule, configured to, when the first IP address and port number corresponding to the extracted IP address and port number are found, replace the IP address and port number in the packet header of the IPSEC packet having gone through the NAT traversal with the first IP address and port number, and recalculate a checksum for the AH authentication.

6. The device according to claim 5, further comprising:
a detection module, configured to detect an NAT traversal ability of the sending end, and detect an NAT device between a receiving end and the sending end.

7. The device according to claim 5, wherein detection module is configured to detect an NAT traversal ability of the sending end by:
receiving an IKE first-stage negotiation packet from the sending end, and if the IKE first-stage negotiation packet has a Vendor ID, VID, payload used for identifying the NAT traversal ability, the receiving end determining that the sending end has the NAT traversal ability.

8. The device according to claim 5, wherein detection module is configured to detect an NAT device between a receiving end and the sending end by:
receiving an IKE first-stage negotiation packet from the sending end;
extracting a Hash value of an IP address and port number from a payload of the IKE first-stage packet as a first Hash value;
extracting an IP address and port number from a packet header of the IKE first-stage packet, and calculating a Hash value of the extracted IP address and port number as a second Hash value;
comparing the first Hash value with the second Hash value; and
if the first Hash value and the second Hash value are inconsistent, determining that there is the NAT device between the receiving end and the sending end.

9. A computer program, comprising program instructions, wherein, when the program instructions are executed by a receiving end, the receiving end can implement the method according to any one of claims 1 to 4.

10. A carrier carrying the computer program according to claim 9.

## Patentansprüche

1. Verfahren zum Ausführen einer Authentification Header (AH)-Authentifizierung an einem Internet Protocol Security (IPSEC)-Paket, das eine Network Address Translation (NAT)-Durchquerung durchlaufen hat, wobei das Verfahren Folgendes umfasst:
ein Empfangsende empfängt (S101) ein Internet Key Exchange (IKE) Second Stage Negotiation-Paket von einem Sende-Ende;
**dadurch gekennzeichnet, dass**
das Empfangsende eine ursprüngliche Internet-Protokoll (IP)-Adresse und Port-Nummer aus Nutzdaten des IKE Second Stage Negotiation-Paketes als eine erste IP-Adresse und Port-Nummer extrahiert (S102) und eine IP-Adresse und Port-Nummer aus einem Paket-Header des IKE Second Stage Negotiation-Paketes als eine zweite IP-Adresse und Port-Nummer extrahiert (S102);
das Empfangsende eine NAT-Übersetzungstabelle gemäß der ersten IP-Adresse und Port-Nummer und der zweiten IP-Adresse und Port-Nummer erstellt (S103), umfassend: das Empfangsende vergleicht die erste IP-Adresse und Port-Nummer mit der zweiten IP-Adresse und Port-Nummer; und wenn die erste IP-Adresse und Port-Nummer und die zweite IP-Adresse und Port-Nummer nicht übereinstimmen, so erstellt das Empfangsende die NAT-Übersetzungstabelle, die zum Übersetzen der ersten IP-Adresse und Port-Nummer und der zweiten IP-Adresse und Port-Nummer verwendet; und
das Empfangsende führt die AH-Authentifizierung an dem empfangenen IPSEC-Paket, das die NAT-Durchquerung durchlaufen hat, unter Verwendung der NAT-Übersetzungstabelle aus (S104), umfassend: das Empfangsende empfängt das IPSEC-Paket von dem Sende-Ende, extrahiert eine IP-Adresse und Port-Nummer aus einem Paket-Header des IPSEC-Paketes; das Empfangsende sucht nach der ersten IP-Adresse und Port-Nummer, die der extrahierten IP-Adresse und Port-Nummer entsprechen, in der NAT-Übersetzungstabelle; und
wenn die erste IP-Adresse und Port-Nummer, die der extrahierten IP-Adresse und Port-Nummer entsprechen, gefunden werden, so ersetzt das Empfangsende die IP-Adresse und Port-Nummer in dem Paket-Header des IPSEC-Paketes, das die NAT-Durchquerung durchlaufen hat, durch die erste IP-Adresse und Port-Nummer und berechnet eine Prüfsumme für die AH-Authentifizierung neu.

2. Verfahren nach Anspruch 1, wobei, vor dem Schritt, in dem ein Empfangsende ein IKE Negotiation-Paket einem Sende-Ende empfängt, das Verfahren des Weiteren Folgendes umfasst: einen Schritt, in dem das Empfangsende eine NAT-Durchquerungsfähigkeit des Sende-Endes detektiert, und einen Schritt des Detektierens einer NAT-Vorrichtung zwischen dem Empfangsende und dem Sende-Ende.

3. Verfahren nach Anspruch 2, wobei der Schritt des Detektierens einer NAT-Durchquerungsfähigkeit des Sende-Endes Folgendes umfasst:
das Empfangsende empfängt ein IKE First Stage Negotiation-Paket von dem Sende-Ende, und wenn das IKE First Stage Negotiation-Paket Vendor ID (VID)-Nutzdaten hat, die zum Identifizieren der NAT-Durchquerungsfähigkeit verwendet werden, so bestimmt das Empfangsende, dass das Sende-Ende die NAT-Durchquerungsfähigkeit hat.

4. Verfahren nach Anspruch 2, wobei der Schritt des Detektierens einer NAT-Vorrichtung zwischen dem Empfangsende und dem Sende-Ende Folgendes umfasst:
das Empfangsende empfängt ein IKE First Stage Negotiation-Paket von dem Sende-Ende;
Extrahieren eines Hash-Wertes einer IP-Adresse und Port-Nummer aus Nutzdaten des IKE First Stage-Paketes als einen ersten Hash-Wert;
Extrahieren einer IP-Adresse und Port-Nummer aus einem Paket-Header des IKE First Stage-Paketes und Berechnen eines Hash-Wertes der extrahierten IP-Adresse und Port-Nummer als einen zweiten Hash-Wert;
Vergleichen des ersten Hash-Wertes mit dem zweiten Hash-Wert; und wenn der erste Hash-Wert und der zweite Hash-Wert nicht übereinstimmen, Bestimmen, dass sich die NAT-Vorrichtung zwischen dem Empfangsende und dem Sende-Ende befindet.

5. Vorrichtung zum Ausführen einer Authentification Header (AH)-Authentifizierung an einem Internet Protocol Security (IPSEC)-Paket, das eine Network Address Translation (NAT)-Durchquerung durchlaufen hat, wobei die Vorrichtung Folgendes umfasst:
ein Empfangsmodul (201), das dafür konfiguriert ist, ein Internet Key Exchange (IKE) Second Stage Negotiation-Paket von einem Sende-Ende zu empfangen;
**gekennzeichnet durch**:
ein Ausgabemodul (202), das dafür konfiguriert ist, eine ursprüngliche Internet-Protokoll (IP)-Adresse und Port-Nummer aus Nutzdaten des IKE Second Stage Negotiation-Paketes als eine erste IP-Adresse und Port-Nummer zu extrahieren und eine IP-Adresse und Port-Nummer aus einem Paket-Header des IKE Second Stage Negotiation-Paketes als eine zweite IP-Adresse und Port-Nummer zu extrahieren,
ein Übersetzungstabellen-Erstellungsmodul (203), das dafür konfiguriert ist, eine NAT-Übersetzungstabelle gemäß der ersten IP-Adresse und Port-Nummer und der zweiten IP-Adresse und Port-Nummer zu erstellen; und
ein Authentifizierungsmodul (204), das dafür konfiguriert ist, die AH-Authentifizierung an dem empfangenen IPSEC-Paket, das die NAT-Durchquerung durchlaufen hat, unter Verwendung der NAT-Übersetzungstabelle auszuführen;
wobei das Übersetzungstabellen-Erstellungsmodul (203) Folgendes umfasst:
ein Vergleichs-Teilmodul, das dafür konfiguriert ist, die erste IP-Adresse und Port-Nummer mit der zweiten IP-Adresse und Port-Nummer zu vergleichen; und
ein Erstellungs-Teilmodul, das dafür konfiguriert ist, wenn die erste IP-Adresse und Port-Nummer und die zweite IP-Adresse und Port-Nummer nicht übereinstimmen, die NAT-Übersetzungstabelle zu erstellen, die dafür verwendet wird, die erste IP-Adresse und Port-Nummer und die zweite IP-Adresse und Port-Nummer zu übersetzen;
wobei das Authentifizierungsmodul (204) Folgendes umfasst:
ein Extraktions-Teilmodul, das dafür konfiguriert ist, eine IP-Adresse und Port-Nummer aus einem Paket-Header des empfangenen IPSEC-Paketes zu extrahieren, das die NAT-Durchquerung durchlaufen hat;
ein Such-Teilmodul, das dafür konfiguriert ist, die erste IP-Adresse und Port-Nummer, die der extrahierten IP-Adresse und Port-Nummer entsprechen, in der NAT-Übersetzungstabelle zu suchen; und
ein Authentifizierungs-Teilmodul, das dafür konfiguriert ist, wenn die erste IP-Adresse und Port-Nummer, die der extrahierten IP-Adresse und Port-Nummer entsprechen, gefunden werden, die IP-Adresse und Port-Nummer in dem Paket-Header des IPSEC-Paketes, das die NAT-Durchquerung durchlaufen hat, durch die erste IP-Adresse und Port-Nummer zu ersetzen und eine Prüfsumme für die AH-Authentifizierung neu zu berechnen.

6. Vorrichtung nach Anspruch 5, die des Weiteren Folgendes umfasst:
ein Detektionsmodul, das dafür konfiguriert ist, die NAT-Durchquerungsfähigkeit des Sende-Endes zu detektieren und eine NAT-Vorrichtung zwischen einem Empfangsende und dem Sende-Ende zu detektieren.

7. Vorrichtung nach Anspruch 5, wobei das Detektionsmodul dafür konfiguriert ist, die NAT-Durchquerungsfähigkeit des Sende-Endes zu detektieren durch:
Empfangen eines IKE First Stage Negotiation-Paketes von dem Sende-Ende, und wenn das IKE First Stage Negotiation-Paket Vendor ID (VID)-Nutzdaten hat, die zum Identifizieren der NAT-Durchquerungsfähigkeit verwendet werden, so bestimmt das Empfangsende, dass das Sende-Ende die NAT-Durchquerungsfähigkeit hat.

8. Vorrichtung nach Anspruch 5, wobei das Detektionsmodul dafür konfiguriert ist, die NAT-Vorrichtung zwischen einem Empfangsende und dem Sende-Ende zu detektieren durch:
Empfangen eines IKE First Stage Negotiation-Paketes von dem Sende-Ende;
Extrahieren eines Hash-Wertes einer IP-Adresse und Port-Nummer aus Nutzdaten des IKE First Stage-Paketes als einen ersten Hash-Wert;
Extrahieren einer IP-Adresse und Port-Nummer aus einem Paket-Header des IKE First Stage-Paketes und Berechnen eines Hash-Wertes der extrahierten IP-Adresse und Port-Nummer als einen zweiten Hash-Wert;
Vergleichen des ersten Hash-Wertes mit dem zweiten Hash-Wert; und
wenn der erste Hash-Wert und der zweite Hash-Wert nicht übereinstimmen, Bestimmen, dass sich die NAT-Vorrichtung zwischen dem Empfangsende und dem Sende-Ende befindet.

9. Computerprogramm, das Programminstruktionen umfasst, wobei, wenn die Programminstruktionen durch ein Empfangsende ausgeführt werden, das Empfangsende das Verfahren nach einem der Ansprüche 1 bis 4 implementieren kann.

10. Träger, auf dem sich das Computerprogramm nach Anspruch 9 befindet.

## Revendications

1. Procédé pour effectuer une authentification d'en-tête d'authentification, AH, d'un paquet de sécurité de protocole Internet, IPSEC, et en passer à travers une traversée de traduction d'adresse de réseau, NAT, comprenant:
une extrémité de réception recevant (S101) un paquet de négociation de second stade d'échange de clé Internet, IKE, provenant d'une extrémité de réception;
**caractérise en ce que**
l'extrémité de réception extrait (S102) une adresse IP de protocole Internet d'origine et un numéro de port d'une charge utile du paquet de négociation de second stade IKE comme une première adresse IP et un premier numéro de port, et extrait (S102) une adresse IP et un numéro de port d'un en-tête de paquet du paquet de négociation de second stade IKE comme une seconde adresse IP et un second numéro de port ;
l'extrémité de réception établit (S103) une table de traduction NAT selon la première adresse IP et le premier numéro de port et la seconde adresse IP et le second numéro de port, comprenant :
l'extrémité de réception compare la première adresse IP et le premier numéro de port avec la seconde adresse IP et le second numéro de port ; et si la première adresse IP et le premier numéro de port et la seconde adresse IP et le second numéro de port ne sont pas cohérents, l'extrémité de réception établit la table de traduction NAT utilisée pour traduire la première adresse IP et le premier numéro de port et la seconde adresse IP et le second numéro de port ; et
l'extrémité de réception effectue (S104) l'authentification AH sur le paquet IPSEC reçu étant passé à travers la traversée NAT en utilisant la table de traduction NAT, comprenant: l'extrémité de réception reçoit le paquet IPSEC provenant de l'extrémité d'envoi, extrait une adresse IP et un numéro de port d'un en-tête de paquet du paquet IPSEC;
l'extrémité de réception recherche la première adresse IP et le premier numéro de port correspondant à l'adresse IP et au numéro de port extrait dans la table de traduction NAT; et, si la première adresse IP et le premier numéro de port correspondant à l'adresse IP et au numéro de port extrait sont trouvés, l'extrémité de réception remplace l'adresse IP et le numéro de port dans l'en-tête de paquet du paquet IPSEC étant passé à travers la traversée NAT par la première adresse IP et le premier numéro de port et recalcule une somme de vérification pour l'authentification AH.

2. Procédé selon la revendication 1, dans lequel, avant l'étape de réception par une extrémité de réception des paquets de négociation IKE provenant d'une extrémité d'envoi, le procédé comprend en outre : une étape où l'extrémité de réception détecte une capacité de traversée NAT de l'extrémité d'envoi, et une étape de détection d'un dispositif NAT entre l'extrémité de réception et l'extrémité d'envoi.

3. Procédé selon la revendication 2, dans lequel l'étape de détection d'une capacité de traversée NAT de l'extrémité de réception comprend :
l'extrémité de réception reçoit un paquet de négociation de premier stade IKE provenant de l'extrémité d'envoi et si le paquet de négociation de premiers stade IKE a une charge utile d'ID de vendeur, VID, utilisée pour identifier la capacité de traversée NAT, l'extrémité de réception détermine que l'extrémité d'envoi a la capacité de traversée NAT.

4. Procédé selon la revendication 2, dans lequel l'étape de détection d'un dispositif NAT entre l'extrémité de réception et l'extrémité d'envoi comprend de:
recevoir par l'extrémité de réception un paquet de négociation de premier stade IKE provenant de l'extrémité d'envoi;
extraire une valeur de hachage d'une adresse IP et un numéro de port d'une charge utile du paquet de premier stade IKE comme une première valeur de hachage;
extraire une adresse IP et un numéro de port d'un en-tête de paquet du paquet de premier stade IKE et calculer une valeur de hachage de l'adresse IP extraite et un numéro de port comme seconde valeur de hachage;
comparer la première valeur de hachage avec la seconde valeur de hachage ; et
si la première valeur de hachage et la seconde valeur de hachage ne sont pas cohérentes, déterminer que le dispositif NAT se trouve entre l'extrémité de réception et l'extrémité d'envoi.

5. Dispositif pour effectuer une authentification d'en-tête d'authentification, AH, sur un paquet de sécurité de protocole Internet, IPSEC, étant passé à travers une traversée de traduction d'adresse de réseau, NAT, comprenant:
un module de réception (201), configuré pour recevoir un paquet de négociation de second stade d'échange de clé Internet, IKE provenant d'une extrémité d'envoi;
**caractérisé par**
un module d'extraction (202) configuré pour extraire une adresse IP de protocole Internet d'origine et un numéro de port d'une charge utile du paquet de négociation de second stade IKE comme une première adresse IP et un premier numéro de port, et extraire une adresse IP et un numéro de port d'un en-tête de paquet du paquet de négociation de second stade IKE comme une seconde adresse IP et un second numéro de port ;
un module d'établissement de table de traduction (203) configuré pour établir une table de traduction NAT selon la première adresse IP et le premier numéro de port et la seconde adresse IP et le second numéro de port; et
un module d'authentification (204) configuré pour effectuer l'authentification AH sur le paquet IPSEC reçu étant passé à travers la traversée NAT en utilisant la table de traduction NAT;
dans lequel le module d'établissement de table de traduction (203) comprend:
un sous-module de comparaison, configuré pour comparer la première adresse IP et le premier numéro de port avec la seconde adresse IP et le second numéro de port ; et
un sous-module d'établissement, configuré pour, lorsque la première adresse IP et le premier numéro de port et la seconde adresse IP et le second numéro de port ne sont pas cohérents, établir la table de traduction NAT utilisée pour traduire la première adresse IP et le numéro de port et la seconde adresse IP et le second numéro de port,
dans lequel le module d'authentification (204) comprend :
un sous-module d'extraction, configuré pour extraire l'adresse IP et un numéro de port d'un en-tête de paquet du paquet IPSEC reçu étant passé à travers la traversée NAT;
un sous-module de recherche, configuré pour rechercher la première adresse IP et le premier numéro de port correspondant à l'adresse IP et au numéro de port extrait dans la table de traduction NAT; et
un sous-module d'authentification, configuré pour, lorsque la première adresse IP et le premier numéro de port correspondant à l'adresse IP et au numéro de port extraits sont trouvés, remplacer l'adresse IP et le numéro de port dans l'en-tête de paquet du paquet IPSEC étant passé à travers la traversée NAT par la première adresse IP et le premier numéro de port et recalculer une somme de vérification pour l'authentification AH.

6. Dispositif selon la revendication 5, comprenant en outre :
un module de détection, configuré pour détecter une capacité de traversée NAT de l'extrémité d'envoi et détecter un dispositif NAT entre une extrémité de réception et l'extrémité d'envoi.

7. Dispositif selon la revendication 5, dans lequel le module de détection est configuré pour détecter une capacité de traversée NAT de l'extrémité d'envoi en:
recevant un paquet de négociation de premier stade IKE de l'extrémité d'envoi, et si le paquet de négociation de premier stade IKE a une charge utile d'ID de vendeur, VID, utilisée pour identifier la capacité de traversée NAT, en déterminant par l'extrémité de réception que l'extrémité d'envoi a la capacité de traversée NAT.

8. Dispositif selon la revendication 5, dans lequel le module de détection est configuré pour détecter un dispositif NAT entre l'extrémité de réception et l'extrémité d'envoi en :
recevant un paquet de négociation de premier stade IKE provenant de l'extrémité d'envoi;
extrayant une valeur de hachage d'une adresse IP et un numéro de port d'une charge utile du paquet de premier stade IKE comme une première valeur de hachage;
extrayant une adresse IP et un numéro de port d'un en-tête de paquets du paquet de premier stade IKE et calculant une valeur de hachage de l'adresse IP extraite et un numéro de port comme seconde valeur de hachage;
comparant la première valeur de hachage avec la seconde valeur de hachage ; et
si la première valeur de hachage et la seconde valeur de hachage ne sont pas cohérentes, déterminant que le dispositif NAT se trouve entre l'extrémité de réception et l'extrémité d'envoi.

9. Programme informatique comprenant des instructions de programme, dans lequel, lorsque les instructions de programme sont exécutées par une extrémité de réception, l'extrémité de réception peut implémenter le procédé selon une quelconque des revendications 1 à 4.

10. Support renfermant le programme informatique selon la revendication 9.
